# EUROPEAN PATENT APPLICATION

(11) **EP 3 834 688 A1**
(43) Date of publication of application: **16.06.2021**
(21) Application number: 19846845.6
(22) Date of filing: 10.07.2019
(51) Int. Cl.: A47K 7/04

(54) **FANCY BACK SCRUBBING MACHINE**

(30) Priority: 08.08.2018 CN 201821272153 U
(71) Applicant: Fu, Xing, Zhengzhou, Henan 450000 (CN)
(72) Inventor: FU, Qiang, Zhengzhou, Henan 450000 (CN); CHAN, Shaohang, Zhengzhou, Henan 450000 (CN); YANG, Fan, Zhengzhou, Henan 450000 (CN)
(74) Representative: Zaboliene, Reda
(86) International application number: PCT/CN2019/095443
(87) International publication number: WO 2020/029737

(57) **Abstract**

A fancy back scrubbing machine, comprising a scrubbing towel (1) and scrubbing panels, the scrubbing panels comprising scrubbing panel A (3) and scrubbing panel B (5). During use of the back scrubbing machine, the scrubbing towel (1) is sleeved on scrubbing panel A (3). One end of scrubbing panel A (3) is hinged on one end of scrubbing panel B (5). During use of the back scrubbing machine, scrubbing panel A (3) and scrubbing panel B (5) are closed together, and the back surface of the closing surface of scrubbing panel B (5) is provided with at least one connection piece. The connection piece is connected to a connection frame (10), and an end of the connection frame (10) is connected to a power box (24) by means of a bearing. The power box (24), by means of a transmission system, drives the connection frame (10) to rotate, the transmission system being provided inside the power box (24). The present invention is simple in structure and simple to operate, and allows, during scrubbing, the connection frame to undergo reciprocating movement under the action of the power box, driving the scrubbing panels to undergo reciprocating movement. The scrubbing panels can use the flexible behavior of springs on the basis of ergonomics of the human back so that the scrubbing panels do not cause pain or injury to a person's body during scrubbing. The back scrubbing machine is able to scrub the entirety of a person's back.

## Description

### Technical Field

The disclosure relates to the field of a back scrubbing machine, in particular to the field of a fancy back scrubbing machine.

### Background Art

With the continuous improvement of the living standard of people, bathing becomes an indispensable thing in people's life, and scrubbing is the key in bathing, which not only can clean the body, but also can play the role of massage to relax the body. Traditional scrubbing uses a scrubbing towel or a towel for scrubbing, however, due to limitations of human body structure, the back of a person is not easy to get scrubbed when the person takes a bath. Various back scrubbing machines are available in the market at present, which can realize the function of scrubbing the human back. However, all of these back scrubbing machines have shortcomings: for example, the mechanical back scrubbing machine can only rotate along the axis to make human back adapt to the back scrubbing machine, and has a constant rotation speed so that it is easy to make human produce a painful feeling during scrubbing bath, which brings inconvenience to human use; and some back scrubbing machines can only be used for scrubbing up and down or scrubbing left and right, and cannot be used for scrubbing irregular tracks like a normal person.

### DISCLOSURE

In order to solve the technical problem that the back scrubbing machine in the prior art cannot perform irregular track scrubbing like a normal person, the present disclosure provides a fancy back scrubbing machine, which aims to meet the bath scrubbing requirements of the person and enable the back scrubbing machine to perform irregular track scrubbing like a normal person.

The purpose of the disclosure is completed by adopting the following technical solution: a fancy back scrubbing machine includes a scrubbing towel and a scrubbing panel comprising a scrubbing panel A and a scrubbing panel B, wherein the scrubbing towel is sleeved on the scrubbing panel A during use of the fancy back scrubbing machine, and one end of the scrubbing panel A is hinged on one end of the scrubbing panel B, wherein the scrubbing panel A and the scrubbing panel B are closed during use of the back scrubbing machine, and the back surface of the closed surface of the scrubbing panel B is provided with at least one connection piece, wherein the connection piece is connected to a connection frame, and wherein an end of the connection frame is connected to a power box by means of a bearing, and the power box drives the connection frame to rotate through a transmission system.

Preferably, a hinge piece A is arranged in the middle of the back surface of the closing surface of the scrubbing panel B, and a hollow pipe are arranged at each of two points which are on the back surface of the closing surface of the scrubbing panel B with the hinge piece A as a symmetric point; and a hinge piece B hinged with the hinge piece A is arranged on the connection frame, and two connecting shafts each connected with the hollow pipe are arranged on the connection frame and are separately inserted into the hollow pipe.

Preferably, a spring is arranged in the hollow pipe.

Preferably, the bearing comprises a bearing A and a bearing B, and the transmission system comprises a gear A, a gear B, a gear C, a gear bearing A, a gear bearing B and a motor. The gear A is provided with a hole A, and the gear B is provided with a hole B. The bearing A is fixedly connected to the hole A, and the bearing B is fixedly connected to the hole B. The gear A is arranged on the gear bearing A, and the gear B is arranged on the gear bearing B. The distance from the center point of the hole A to the center point of the hole B is equal to the distance from the circle center of the gear A to the circle center of the gear B. The gear A is meshed with the gear C, the gear B is meshed with the gear C, and the gear C is connected with an output shaft of the motor.

Preferably, the bearing comprises a bearing A and a bearing B. The transmission system comprises a gear A, a toothless free wheel, a gear C, a gear bearing A, a gear bearing B, a stagnation wheel and a motor. The gear A is provided with a hole A, and the toothless free wheel is provided with a hole B. The bearing A is fixedly connected to the hole A, and the bearing B is fixedly connected to the hole B. The gear A is arranged on the gear bearing A, and the toothless free wheel is arranged on the gear bearing B. The distance from the center point of the hole A to the center point of the hole B is equal to the distance from the circle center of the gear A to the circle center of the toothless free wheel. The gear A is meshed with the gear C, the gear C is connected with an output shaft of the motor, and the toothless free wheel is contacted with the stagnation wheel.

Preferably, the closing surface of the scrubbing panel A has a concave groove, and the other end of the hinged end of the scrubbing panel A is provided with a snap ring. The closing surface of the scrubbing panel B has a convex groove, and the concave groove of the scrubbing panel A and the convex groove of the scrubbing panel B are mortise-and-tenon structures.

Preferably, the scrubbing towel is elastic and cylindrical, of which each of two ends is open and provided with a lanyard.

Preferably, the scrubbing panel B is provided with a hook.

Preferably, the scrubbing panel A is a semi-cylinder.

The advantageous effects of the disclosure are as follows. As compared with prior art, the back scrubbing machine has a simple structure, and can be easily operated. In the transmission system, when the motor is powered, the motor drives the gear to rotate, then the gear rotates to drive the connection frame to rotate, and the connection frame reciprocates along with the gear to drive the scrubbing panel to make a reciprocating movement. The spring device is arranged on the scrubbing panel so that the scrubbing panel can incline along with the uneven surface of the back of a human body when the scrubbing panel is used for scrubbing the back; and the working surface of the back scrubbing machine conforms the ergonomic of the uneven back of the human body when the back is scrubbed, which cause that the scrubbing towel can be scrubbed on the back of the human body in a reciprocating manner, and the back of the human body can be completely scrubbed up, down, left and right.

### Brief Description of Drawings

FIG. 1 is a partial structural schematic diagram of an embodiment of the disclosure;
FIG. 2 is a schematic diagram of the overall structure of the embodiment of the disclosure;
FIG. 3 is a schematic diagram of the overall structure of another embodiment of the disclosure.

In the drawings, 1 is a scrubbing towel, 2 is a lanyard, 3 is a scrubbing panel A, 4 is a snap ring, 5 is a scrubbing panel B, 6 is a hook, 7 is a hinge piece A, 8 is a hollow pipe, 9 is a spring, 10 is a connection frame, 11 is a hinge piece B, 12 is a connecting shaft, 13 is a shaft A, 14 is a shaft B, 15 is a gear A, 16 is a gear B, 17 is a gear C, 18 is a gear bearing A, 19 is a gear bearing B, 20 is a hole A, 21 is a hole B, 22 is a toothless free wheel, 23 is a stagnant wheel, 24 is a power box.

### Best Mode

The technical solution of the disclosure is described in more detail with reference to the following drawings.

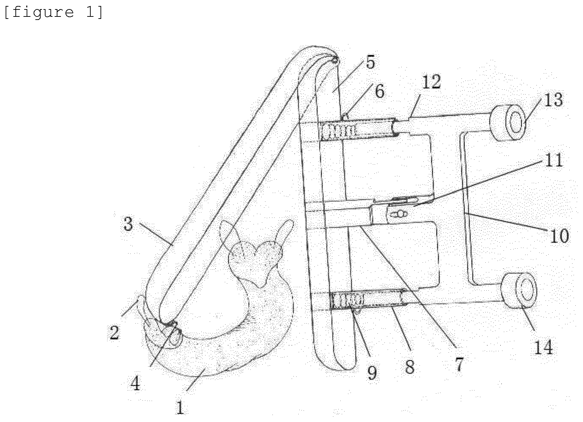

As shown in FIGS. 1, 2 and 3, a fancy back scrubbing machine comprises a scrubbing towel 1 and scrubbing panels comprising a scrubbing panel A 3 and a scrubbing panel B 5. During use of the back scrubbing machine, the scrubbing towel 1 is sleeved on the scrubbing panel A 3, and one end of the scrubbing panel A 3 is hinged to one end of the scrubbing panel B 5. During use of the back scrubbing machine, the scrubbing panel A 3 and the scrubbing panel B 5 are closed, the back surface of the closed surface of the scrubbing panel B 5 is provided with at least one connection piece, the connection piece is connected with a connection frame 10, an end of the connection frame 10 is connected with a power box 24 by means of a bearing, and the power box 24 drives the connection frame 10 to rotate by means of a transmission system.

Furthermore, a hinge piece A 7 is arranged in the middle of the back surface of the closing surface of the scrubbing panel B 5, and a hollow pipe 8 is arranged at each of the two points on the back surface of the closing surface of the scrubbing panel B 5 with the hinge piece A 7 as a symmetrical point. The connection frame 10 is provided with a hinge piece B 11 hinged with the hinge piece A 7, and is provided with two connecting shafts 12 each connected with the hollow pipe 8 and inserted into the hollow pipe 8.

Furthermore, a spring 9 is arranged in the hollow pipe 8.

Furthermore, the bearing comprises a bearing A 13 and a bearing B 14, and the transmission system comprises a gear A 15, a gear B 16, a gear C 17, a gear bearing A 18, a gear bearing B 19 and a motor. The gear A 15 is provided with a hole A 20, and the gear B 16 is provided with a hole B 21. The bearing A 13 is fixedly connected to the hole A 20, and the bearing B 14 is fixedly connected to the hole B 21. The gear A 15 is arranged on the gear bearing A 18, and the gear B 16 is arranged on the gear bearing B 19. The distance from the center point of the hole A 20 to the center point of the hole B 21 is equal to the distance from the circle center of the gear A 15 to the circle center of the gear B 16. The gear A 15 is meshed with a gear C 17, the gear B 16 is meshed with the gear C 17, and the gear C 17 is connected with an output shaft of the motor.

Furthermore, the bearing comprises a bearing A 13 and a bearing B 14, and the transmission system comprises a gear A 15, a toothless free wheel 22, a gear C 17, a gear bearing A 18, a gear bearing B 19, a stagnation wheel 23 and a motor. The gear A 15 is provided with a hole A 20, and the toothless free wheel 22 is provided with a hole B 21. The bearing A 13 is fixedly connected to the hole A 20, and the bearing B 14 is fixedly connected to the hole B 21. The gear A 15 is arranged on the gear bearing A 18, and the toothless free wheel 22 is arranged on the gear bearing B 19. The distance from the center point of the hole A 20 to the center point of the hole B 21 is equal to the distance from the circle center of the gear A 15 to the circle center of the toothless free wheel 22. The gear A 15 is meshed with the gear C 17, the gear C 17 is connected with an output shaft of the motor, and the toothless free wheel 22 is contacted with the stagnation wheel 23.

Furthermore, the closing surface of the scrubbing panel A 3 has a concave groove, the other end of the hinged end of the scrubbing panel A 3 is provided with a snap ring 4. The closing surface of the scrubbing panel B 5 has a convex groove. The concave groove of the scrubbing panel A 3 and the convex groove of the scrubbing panel B 5 are mortise-and-tenon structure.

Furthermore, the scrubbing towel 1 is elastic and cylindrical, of which each of two ends is open and is provided with a lanyard 2.

Furthermore, a hook 6 is arranged on the scrubbing panel B 5.

Further, the scrubbing panel A 3 is set to be a semi-cylinder.

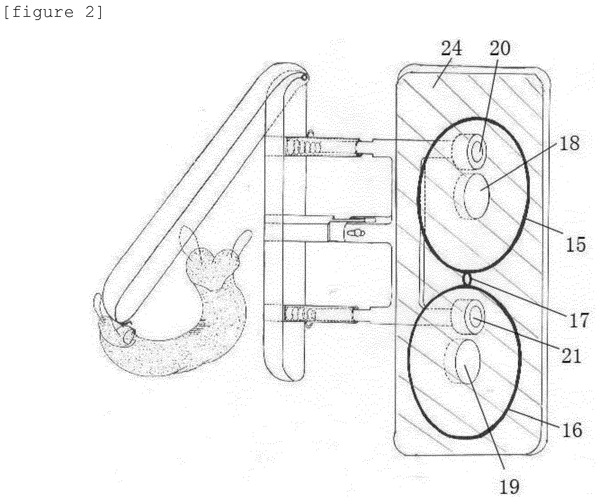

The working principle of the disclosure is as follows. As shown in FIGS. 1 and 2, during use of the back scrubbing machine, the scrubbing towel 1 is sleeved on the scrubbing panel A 3, the scrubbing panel A 3 is hinged with one end of the scrubbing panel B 5, the scrubbing panel A 3 is combined with the scrubbing panel B 5 through the snap ring 4 provided on the other end of the hinged end of the scrubbing panel A 3, the concave groove on the scrubbing panel A 3 is combined with the convex groove on the scrubbing panel B 5 to combine the scrubbing panel A 3 and the scrubbing panel B 5 so as to form a scrubbing panel for scrubbing, and the lanyard 2 on the scrubbing towel 1 is hung to the hook 6 on the scrubbing panel B 5 in order to fix the scrubbing towel 1 on the scrubbing panel; the scrubbing panel is connected to the connection frame 10 through the hinge piece A 7 and the hollow pipes 8, the connection frame 10 is connected to the power box 24 through the bearing A13 and the bearing B14, and the power box 24 drives the connection frame 10 to rotate through the transmission system; and in the transmission system, when the motor is powered, the motor drives the gear C17 to rotate, the gear C17 is respectively meshed with the gear A15 and the gear B16 to drive the gear A15 and the gear B16 to rotate, the gear A15 and the gear B16 rotate in the same direction to drive the connection frame 10 to rotate, thereby the whole scrubbing panel performing reciprocating motion along with the connection frame 1; and the spring 9 is arranged in the hollow pipe 8 of the scrubbing panel B 5, so when the scrubbing panel moves at an uneven place on the back in the bath scrubbing process, the scrubbing panel can move on the uneven back and follow the curve of the back due to the elasticity of the spring 9, and the scrubbing panel can smoothly move on the back of a human body and move up-and-down to entirely scrubbing the back of the person due to the extending and retracting of the spring 9.

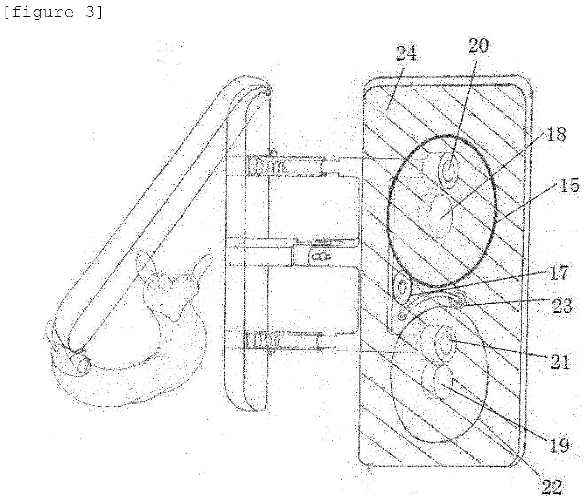

As shown in FIG. 3, in the transmission system, when the motor is powered, the motor drives the gear C17 to rotate, the gear C17 is meshed with the gear A15 to drive the gear A15 to rotate, the gear A15 drives the connection frame 10 to rotate, the connection frame 10 drives the toothless free wheel 22 to rotate, the toothless free wheel 22 is contacted with the stagnation wheel 23, the stagnation wheel 23 applies an opposite acting force to the toothless free wheel 22 so that the steering of the toothless free wheel 22 is opposite to that of the gear A15, the connection frame 10 makes a 8-shaped reciprocating movement under the action of the gear A15 and the toothless free wheel 22, and the entire scrubbing panel makes 8-shaped reciprocating movement along with the connection frame 10; and the spring 9 is arranged in the hollow pipe 8 of the scrubbing panel B 5, so when the scrubbing panel moves at an uneven place on the back in the bath scrubbing process, the scrubbing panel can move on the uneven back and follow the curve of the back due to the elasticity of the spring 9, and the scrubbing panel can smoothly move on the back of a human body and move up-and-down to entirely scrubbing the back of the person due to the extending and retracting of the spring 9.

The foregoing is only the preferred embodiment of the disclosure, and is not used for limiting the technical solution of the disclosure. It should be noted that, further improvement and change can be made by the person in the art without departing from the technical solution of the disclosure, and those improvement and change are all fall in the protection scope of the disclosure.

## Claims

1. A fancy back scrubbing machine, comprising a scrubbing towel (1) and a scrubbing panel,
wherein the scrubbing panel comprising a scrubbing panel A (3) and a scrubbing panel B (5),
wherein during use of the fancy back scrubbing machine, the scrubbing towel (1) is sleeved on the scrubbing panel A (3), and one end of the scrubbing panel A (3) is hinged on one end of the scrubbing panel B (5),
wherein during use of the fancy back scrubbing machine, the scrubbing panel A (3) and the scrubbing panel B (5) are closed, and a back surface of a closing surface of the scrubbing panel B (5) is provided with at least one connection piece connected to a connection frame (10), and
wherein an end of the connection frame (10) is connected to a power box (24) by means of a bearing, and the power box (24) drives the connection frame (10) to rotate by means of a transmission system.

2. The fancy back scrubbing machine of claim 1, wherein a hinge piece A (7) is arranged in the middle of the back surface of the closing surface of the scrubbing panel B (5), and a hollow pipe (8) is arranged at each of two points which are on the back surface of the closing surface of the scrubbing panel B (5) with the hinge piece A as a symmetric point; and
wherein a hinge piece B (11) hinged with the hinge piece A (7) is arranged on the connection frame (10), and two connecting shafts (12) each connected with the hollow pipe (8) are arranged on the connection frame and are separately inserted into the hollow pipe (8).

3. The fancy back scrubbing machine of claim 2, wherein a spring (9) is arranged in the hollow pipe (8).

4. The fancy back scrubbing machine of claim 1, wherein the bearing comprises a bearing A (13) and a bearing B (14), and the transmission system comprises a gear A (15), a gear B (16), a gear C (17), a gear bearing A (18), a gear bearing B (19) and a motor,
wherein the gear A (15) is provided with a hole A (20), and the gear B (16) is provided with a hole B (21),
wherein the bearing A (13) is fixedly connected to the hole A (20), and the bearing B (14) is fixedly connected to the hole B (21),
wherein the gear A (15) is arranged on the gear bearing A (18), and the gear B (16) is arranged on the gear bearing B (19),
wherein the distance from the center point of the hole A (20) to the center point of the hole B (21) is equal to the distance from the circle center of the gear A (15) to the circle center of the gear B (16), and
wherein the gear A (15) is meshed with the gear C (17), the gear B (16) is meshed with the gear C (17), and the gear C (17) is connected with an output shaft of the motor.

5. The fancy back scrubbing machine of claim 1, wherein the bearing comprises a bearing A (13) and a bearing B (14),
wherein the transmission system comprises a gear A (15), a toothless free wheel (22), a gear C (17), a gear bearing A (18), a gear bearing B (19), a stagnation wheel (23) and a motor,
wherein the gear A (15) is provided with a hole A (20), and the toothless free wheel (22) is provided with a hole B (21),
wherein the bearing A (13) is fixedly connected to the hole A (20), and the bearing B (14) is fixedly connected to the hole B (21),
wherein the gear A (15) is arranged on the gear bearing A (18), and the toothless free wheel (22) is arranged on the gear bearing B (19),
wherein the distance from the center point of the hole A (20) to the center point of the hole B (21) is equal to the distance from the circle center of the gear A (15) to the circle center of the toothless free wheel (22),
wherein the gear A (15) is meshed with the gear C (17), the gear C (17) is connected with an output shaft of the motor, and the toothless free wheel (22) is contacted with the stagnation wheel (23).

6. The fancy back scrubbing machine of claim 1, wherein a closing surface of the scrubbing panel A (3) has a concave groove, the other end of a hinged end of the scrubbing panel A (3) is provided with a snap ring (4),
wherein the closing surface of the scrubbing panel B (5) has a convex groove, and
wherein the concave groove of the scrubbing panel A (3) and the convex groove of the scrubbing panel B (5) are mortise-and-tenon structures.

7. The fancy back scrubbing machine of claim 1, wherein the scrubbing towel (1) is elastic and cylindrical, of which each of two ends is open and provided with a lanyard (2) .

8. The fancy back scrubbing machine of claim 1, wherein the scrubbing panel B (5) is provided with a hook (6).

9. The fancy back scrubbing machine of claim 1, wherein the scrubbing panel A (3) is a semi-cylinder.
